Europäisches Patentamt

European Patent Office

Office européen des brevets

(11) Veröffentlichungsnummer: **0 348 796**
**A2**

## (12) EUROPÄISCHE PATENTANMELDUNG

(21) Anmeldenummer: 89111197.3

(22) Anmeldetag: 20.06.89

(51) Int. Cl.⁴ **B23K 26/02** , **G02B 17/00** ,
**G02B 7/18**

(30) Priorität: 01.07.88 DE 3822292

(43) Veröffentlichungstag der Anmeldung:
03.01.90 Patentblatt 90/01

(84) Benannte Vertragsstaaten:
DE FR GB IT

(71) Anmelder: **Firma Carl Zeiss**

**D-7920 Heidenheim (Brenz)(DE)**
(84) DE FR IT

Anmelder: **CARL-ZEISS-STIFTUNG trading as**
**CARL ZEISS**

**D-7920 Heidenheim (Brenz)(DE)**
(84) GB

(72) Erfinder: **Hohberg, Gerhard, Dr.**
**Hornbergstrasse 13**
**D-7080 Aalen-Dewangen(DE)**

(54) Drehspiegelanordnung für einen Laserstrahl.

(57) Bei einer Drehspiegelanordnung für einen Laserstrahl (15), die zwei Drehachsen (21, 22) und eine
Fokussiereinrichtung (13, 33) enthält, wobei der Fokus (14) im Schnittpunkt der Drehachsen (21, 22)
liegt, sind die Drehachsen (21, 22) in einem spitzen
Winkel (27) zueinander angeordnet.

Fig. 2

EP 0 348 796 A2

## Drehspiegelanordnung für einen Laserstrahl

Die vorliegende Erfindung betrifft eine Drehspiegelanordnung für einen Laserstrahl, die zwei Drehachsen und eine Fokussiereinrichtung enthält, wobei der Fokus der Fokussiereinrichtung im Schnittpunkt der Drehachsen liegt.

Bei der Materialbearbeitung mit Lasern an räumlichen Werkstücken sind im allgemeinen fünf Freiheitsgrade der Bewegung notwendig, und zwar drei zum Anfahren des Arbeitspunktes und zwei weitere zur Einstellung der Strahlrichtung, die meist senkrecht zur oft nicht ebenen Werkstückoberfläche erfolgt.

Vielfach sind Laseranlagen im Gebrauch, bei denen der Arbeitspunkt durch Linearbewegungen angefahren wird, entweder durch Führung des Laserstrahls mit linear bewegten Spiegeln in einem Portalsystem oder durch Bewegung des Werkstücks. Die Strahlrichtung wird mit Hilfe von Drehspiegeln eingestellt, wobei durch Drehungen um zwei Achsen jede Strahlrichtung eingestellt werden kann.

Derartige Anlagen haben einen wesentlichen Nachteil: eine Veränderung der Strahlrichtung bewirkt gleichzeitig eine Veränderung der Position des Laserfokus, die dann durch Nachstellen der Linearbewegungen kompensiert werden muß. Dadurch wird der Steueralgorithmus merklich komplizierter und die Positionierzeit länger. Ein noch wesentlicherer Nachteil zeigt sich jedoch bei einer Abschätzung der Genauigkeitsforderungen.

Während die Positionstoleranzen in der Praxis sehr eng sind (z.B. ±0.1 mm), muß die Strahlrichtung nur näherungsweise eingestellt werden (z.B. ±5°). Wenn aber die Richtung eine Rückwirkung auf die Position hat, dann muß die Winkeleinstellung allein wegen dieser Rückwirkung mit einer Toleranz von etwa ±1' erfolgen, also rund zwei Größenordnungen genauer.

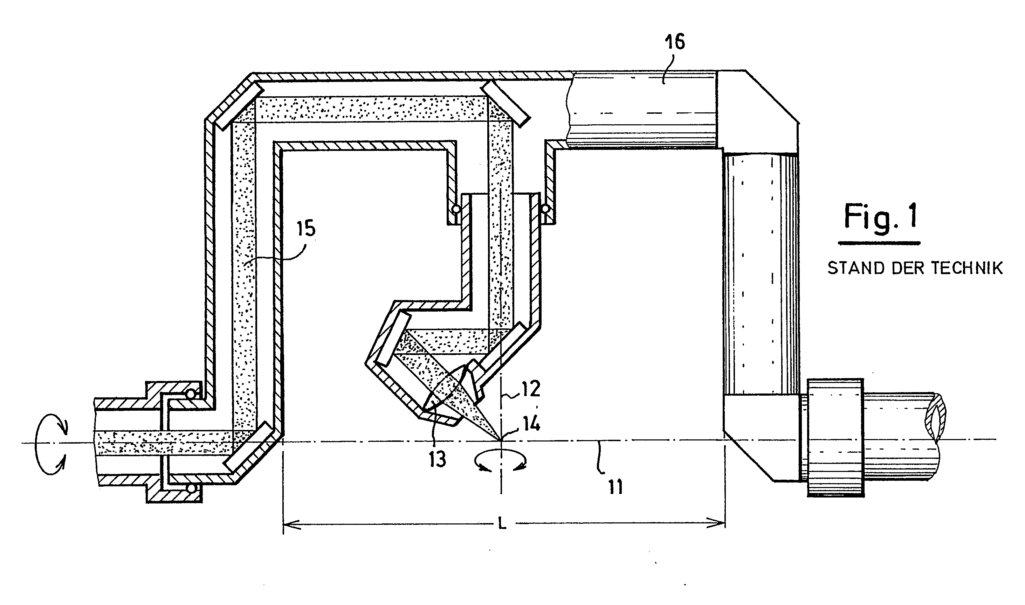

Es ist daher zweckmäßig, eine Drehspiegelanordnung zu verwenden, bei der die Änderung der Strahlrichtung keinen Einfluß auf die Fokuslage hat. Eine bekannte Anlage (LBI-6A der Fa. Binder, beschrieben in einem 4seitigen Prospekt ohne nähere Kennzeichnung), welche diese Forderung erfüllt, ist schematisch in Figur 1 dargestellt. Dabei ist mit (11) eine erste Drehachse und mit (12) eine zweite Drehachse bezeichnet, um welche die Fokussiereinrichtung (13) gedreht werden kann. Der Fokus (14) des Laserstrahles (15) liegt im Schnittpunkt der Drehachsen (11, 12) und wandert daher bei Drehungen nicht aus.

Nachteilig an dieser bekannten Einrichtung ist, daß die Länge (L) des Bügels (16) so groß sein muß, daß das größte in Frage kommende Werkstück ausreichend bewegt werden kann. Die Einrichtung ist infolgedessen sehr aufwendig und entsprechend teuer.

Der vorliegenden Erfindung liegt daher die Aufgabe zugrunde, eine Einrichtung zu schaffen, die trotz geringen Aufwandes auch für sehr große Werkstücke geeignet ist.

Die gestellte Aufgabe wird erfindungsgemäß dadurch gelöst, daß die Drehachsen in einem spitzen Winkel zueinander angeordnet sind.

In einer vorteilhaften Ausführungsform beträgt der Winkel zwischen den Drehachsen 45°.

Weitere vorteilhafte der Erfindung gehen aus den Unteransprüchen und den Erläuterungen zu den Figuren hervor.

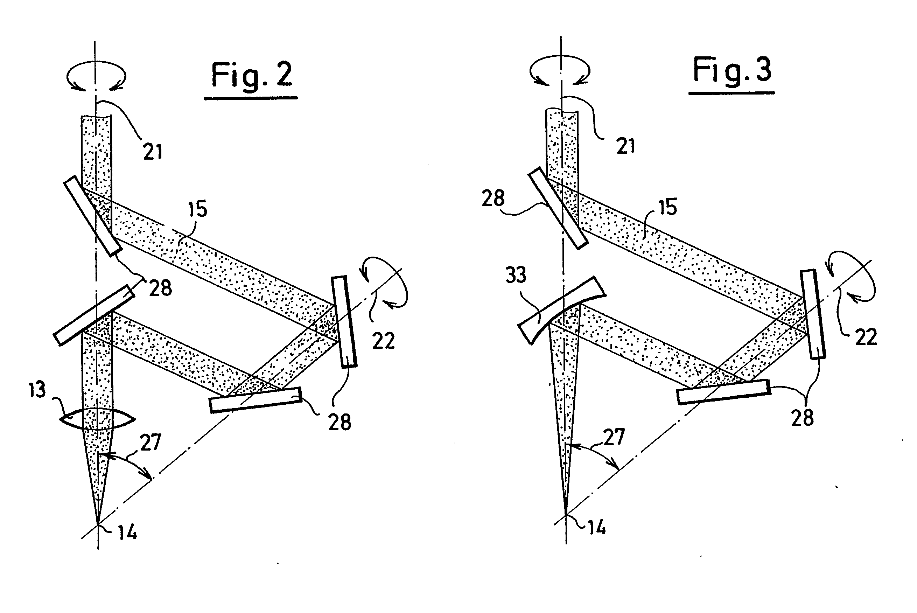

Die Erfindung wird im folgenden anhand der in den Figuren 2 und 3 dargestellten Ausführungsbeispielen näher erläutert. Dabei zeigen

Fig. 2 eine Ausführungsform, bei der die Fokussierung mit einer Linse erfolgt und

Fig. 3 eine Ausführungsform, bei der die Fokussierung mit einem Paraboloidspiegel erfolgt.

In Figur 2 ist mit (21) eine erste Drehachse und mit (22) eine zweite Drehachse bezeichnet, die miteinander den spitzen Winkel (27) bilden und in deren Schnittpunkt der Fokus (14) der Linse (13) liegt, so daß seine Lage durch Drehungen um die Drehachsen (21, 22) nicht verändert wird. Die maximale Neigung des auf den Fokus (14) auftreffenden Laserstrahles zur Drehachse (21) beträgt das Zweifache des Winkels (27); diese Neigung kann durch die ungehinderte Drehbarkeit um die Achse (21) für jeden Azimutwinkel eingestellt werden.

Mit (28) sind Planspiegel bezeichnet, deren Neigungen zu dem auftreffenden Laserstrahl (15) unverändert bleiben, d.h. außer den Drehbewegungen um die Drehachsen (21, 22) findet keine weitere Bewegung von optischen Elementen statt.

Vorteilhaft an der erfindungsgemäßen Einrichtung ist, daß nicht nur der mechanische Aufwand erheblich geringer ist und ein Planspiegel weniger benötigt wird als bei der bekannten, in Figur 1 dargestellten Einrichtung, sondern daß der Aufbau auch von der Größe des zu bearbeitenden Werkstückes unabhängig ist.

In Figur 3 ist eine andere Ausführungsform der Erfindung dargestellt, bei welcher der letzte Planspiegel (28) von Figur 2 durch einen Paraboloidspiegel (33) ersetzt ist, wodurch die Linse (13) von Figur 2 entfällt.

## Ansprüche

1. Drehspiegelanordnung für einen Laserstrahl (15), die zwei Drehachsen (21, 22) und eine Fokussiereinrichtung (13, 33) enthält, wobei der Fokus (14) der Fokussiereinrichtung (13, 33) im Schnittpunkt der Drehachsen (21, 22) liegt, dadurch gekennzeichnet, daß die Drehachsen (21, 22) in einem spitzen Winkel (27) zueinander angeordnet sind.

2. Drehspiegelanordnung nach Anspruch 1, dadurch gekennzeichnet, daß der spitze Winkel (27) im Bereich von 30 bis 60° liegt.

3. Drehspiegelanordnung nach Anspruch 2, dadurch gekennzeichnet, daß der spitze Winkel (27) 45° beträgt.

4. Drehspiegelanordnung nach einer der Ansprüche 1 bis 3, dadurch gekennzeichnet, daß für die letzte Strahlumlenkung ein Paraboloidspiegel (33) vorgesehen ist, mit welchem zugleich die Fokussierung erfolgt.

Fig. 1

STAND DER TECHNIK

EP 0 348 796 A2

Fig. 2

Fig. 3

EP 0 348 796 A2